# EUROPEAN PATENT SPECIFICATION

(11) **EP 4 476 753 B1**
(45) Date of publication and mention of the grant of the patent: **19.11.2025**
(21) Application number: 23703495.4
(22) Date of filing: 10.02.2023
(51) Int. Cl.: H01H 3/60, H01H 33/90

(54) **FAST EARTHING SWITCH FOR INTERRUPTING NON-SHORT-CIRCUIT CURRENTS**
SCHNELLER ERDUNGSSCHALTER ZUR UNTERBRECHUNG VON NICHTKURZSCHLUSSSTRÖMEN
SECTIONNEUR DE TERRE RAPIDE PERMETTANT DE COUPER DES COURANTS AUTRES QUE DE COURT-CIRCUIT

(30) Priority: 11.02.2022 EP 22156430
(43) Date of publication of application: 18.12.2024
(73) Proprietor: Hitachi Energy Ltd, 8050 Zürich (CH)
(72) Inventor: SAXL, David, 8046 Zürich (CH); HINDER, Andrin, 5113 Holderbank AG (CH); KORBEL, Jakub, 5400 Baden (CH); ERFORD, Tobias, 8050 Zürich (CH)
(74) Representative: Michalski Hüttermann & Partner Patentanwälte mbB
(86) International application number: PCT/EP2023/053357
(87) International publication number: WO 2023/152321

(56) References cited:
- DE-A1- 19 625 128
- FR-A- 1 503 487
- FR-A1- 2 246 048
- GB-A- 393 226
- US-A- 3 852 551
- US-A1- 2018 040 442
- US-B2- 10 964 498

## Description

### Technical Field

The invention relates to a fast earthing switch for interrupting non-short-circuit currents comprising two contacts of which at least one contact is movable in relation to the other contact between a closed position, in which the contacts are connected, and an open position, in which the contacts are unconnected, said contacts defining an arcing region in which an arc is generated during a current interrupting operation and in which an arc-quenching medium comprising an arc extinguishing gas is present, and a cylinder-like guiding tube in which the at least one movable contact forming a piston is slidably arranged for linearly moving between the closed position and the open position.

### Background Art

Dielectric insulation media in liquid or gaseous state are conventionally applied for the insulation of an electrically conductive part in a wide variety of apparatuses, and in particular also in GIS or components thereof. In medium or high voltage metal-encapsulated switchgears, for example, the electrically conductive part is arranged in a gas-tight housing, which defines an insulating space, said insulation space comprising an insulation gas and separating the housing from the electrically conductive part without allowing electrical currents to pass through the insulation space.

For interrupting the current in e.g. high voltage switchgears, the insulating medium further functions as an arc-quenching medium or arc-extinction medium. This is for example also the case in a disconnector or in an earthing switch, in which the arc generated during current interruption is extinguished under free-burning conditions, meaning that the arc-quenching medium is not actively blown towards the arc.

In conventional gas-insulated switchgears, sulphur hexa-fluoride (SF6) is typically used as insulation medium and/or arc-quenching medium, respectively. Recently, the use of organofluorine compounds in an insulation medium has been suggested as a substitute for conventional insulation media, such as for example a fluoroketone having high insulation capabilities, in particular a high dielectric strength, as well as high arc extinction capabilities. At the same time, they have a very low Global Warming Potential (GWP) and very low toxicity.

A fast acting earthing switch is typically operated by an operating mechanism that provides acceleration of moving contact and also its deacceleration. For a SF6 free solution of such fast acting earthing switch an arc blowing mechanism is required. In principle, required mass flow could be determined which would lead to some kind of pump mechanism. The required piston to create the mass flow to the arc would require linear moving mass and therefore would add kinetic energy, which in turn would require high-performance damping devices with a strong power kinematic chain, resulting in increased costs and technical risks of mechanical lifetime

FR 1 503 487 A describes a disconnect switch comprising a generally hollow, cylindrical housing substantially filled with an electrically insulating gas under pressure, first and second conductors spaced axially within the housing and electrically insulating means for supporting the conductors within the housing and for closing off the gas space within the housing at the ends thereof.

GB 393 226 A describes arc-rupturing in switches, where a fixed contact is located in an arcing-chamber which communicates by means of conduits in a wall of a cylinder with the space in that cylinder above a piston that is fixed to a movable contact.

US 10 964 498 B2 describes a gas-insulated low- or medium-voltage load break switch which includes a housing defining a housing volume for holding an insulation gas at an ambient pressure; a first arcing contact and a second arcing contact arranged within the housing volume, the first and second arcing contacts being movable in relation to each other along an axis of the load break switch and defining a quenching region in which an arc is formed during a current breaking operation.

US 2018/040442 A1 describes a device for interrupting non-short circuit currents only, and in particular relates to a disconnector, more particularly high voltage disconnector, or to an earthing switch, more particularly make-proof earthing switch, and further relates to a low voltage circuit breaker.

### Summary of invention

It is therefore an object of the invention to provide an improved deceleration mechanism for a fast earthing switch for interrupting non-short-circuit currents.

The object of the invention is solved by the features of the independent claims. Preferred implementations are detailed in the dependent claims.

Thus, the object is solved by a fast earthing switch in particular for interrupting non-short-circuit currents and/or for guiding short circuit currents to ground comprising
two contacts of which at least one contact is movable in relation to the other contact between a closed position, in which the contacts are connected, and an open position, in which the contacts are unconnected, said contacts defining an arcing region in which an arc is generated during a current interrupting operation and in which an arc-quenching medium is present,
a cylinder-like guiding tube in which the at least one movable contact forming a piston is slidably arranged for linearly moving between the closed position and the open position, whereby
the guiding tube is closed at an upper end and/or at a thereto opposite lower end so that that the piston defines a first compression chamber with the upper end and/or a second compression chamber with the lower end for thereby decelerating movement of the piston when moving into the open position and/or into the closed position.

The proposed solution performs the deacceleration by means of a gas damper provided by the piston and the guiding tube respectively the upper end and/or the lower end of the guiding tube, thereby resulting in reduced wear and reduced high mechanical loads on the operating mechanism of the fast earthing switch that is typically maximum loaded and prior art when deacceleration takes place. In other words, the piston the required for creating a mass flow to the arc is a used in its end positions as gas damper thereby allowing a deacceleration at both ends of the stroke. Further, as the kinetic energy to be absorbed in a close operation i.e. when moving to the closed position is much higher than the kinetic energy in an open operation i.e. when moving to the open position, the proposed solution allows for each moving direction definition of a specific damping characteristic. Said damping characteristic can be defined, for example, by dimensioning the piston and/or the guiding tube respectively of an end of the guiding tube, or by means of a gas escape limiting device described below. Further, as the gas damper has an efficiency of 100%, in particular compared to tailor made oil dampers and rubber dampers having a maximal damping efficiency of 50%, with the proposed solution there is no back bouncing which is deadly in case of a make proof switching.

The fast earthing switch in particular for interrupting non-short-circuit currents is preferably provided as a device designed for interrupting non short-circuit currents only, in particular as a disconnector, more particularly as a high voltage disconnector, or an earthing switch, more particularly as a make-proof earthing switch, or as a medium voltage or high voltage gas-insulated switchgear, GIS, comprising such a device. The term "short-circuit currents", as opposed to non-short circuit currents, can be understood as currents that are established in the first, transient phase of up to approximately 3 seconds after the point in time, when from a grid operated under high voltage the parts under high voltage get connected to ground. According to this definition, the term "non short-circuit currents" preferably relates to any currents not falling under the definition of "short-circuit currents" given above.

A short circuit is preferably understood as an electrical circuit that allows a current to travel along an unintended path, often where essentially no or a very low electrical impedance is encountered. In general, such short-circuit currents are preferably interrupted within less than 5 seconds after their occurrence and preferably quicker, for example within less than 3 seconds, to prevent damages in electrical networks. Thus, currents that flow from an electrical network, in particular high-voltage network or medium-voltage network, to ground via unintendend or intended paths and last longer than 3 seconds or longer than 5 seconds, can be considered as "non short-circuit currents". This definition of non-short-circuit currents is preferably based on their duration only and is independent of their magnitude or the intendedness or unintendedness of their occurrence. In particular, this definition of non-short-circuit currents may include nominal currents and excludes short-circuit currents of shorter than 5 seconds duration. For example, such non-short-circuit currents can be currents that are induced between two parallel overhead lines, wherein one line is on both sides connected to ground and the other line is delivering current to loads. The non-short-circuit currents induced in the grounded overhead line can be interrupted by the proposed earthing switch.

The arc-quenching medium may comprise air or at least one air component, in particular selected from the group consisting of: oxygen (02) and nitrogen (N2), carbon dioxide (C02), and mixtures thereof. The air or air component may function as a carrier gas or background gas additionally present to an organofluorine compound of the arc-quenching medium. It is particularly preferred that the ratio of the amount of carbon dioxide to the amount of oxygen ranges from 50:50 to 100:1. It is further preferred that the ratio of the amount of carbon dioxide to the amount of oxygen ranges from 80:20 to 95:5, more preferably from 85:15 to 92:8, even more preferably from 87:13 to less than 90:10, and in particular is about 89:11. In this regard, it has been found on the one hand that oxygen being present in a molar fraction of at least 5% allows soot formation to be prevented even after repeated current interruption events with relatively high current arcing. On the other hand, oxygen being present in a molar fraction of at most 20% (i.e. of 20% or less), more particularly of at most 15% (i.e. of 15% or less), reduces the risk of degradation of the material of the device by oxidation. The organofluorine compound can be selected from the group consisting of fluoroethers (including oxiranes), in particular hydro-fluoromonoethers, fluoroketones, in particular perfluoro-ketones, fluoroolefins, in particular hydrofluo-roolefins, fluoronitriles, in particular perfluoronitriles, and mixtures thereof. The proposed earthing switch achieves safe operation of the despite of the relatively poor cooling efficiency of the carrier gas.

The at least one movable contact is preferably movable in axial direction in respect to the guiding tube. The guiding tube is preferably provided as cylinder, in particular as gas-tight cylinder, which, however, is fluidly connected to the arcing region. The upper end may constitute an upper radially extending base area of the cylinder and/or the lower end may constitute a lower radially extending base area of the cylinder. An upper end of the movable contact is preferably provided as the piston, provided in particular as one-piece with the movable contact. The movable contact respectively the piston preferably extends orthogonally through the lower end, in particular through the mid of the lower end.

According to a preferred implementation at least one pressure relief valve is provided in the upper end and/or in the lower end of the guiding tube. The pressure relief valve can be provided as gas escape limiting device thereby allowing creation of a specific damping characteristic. Preferably, the pressure relief valve is provided as penetrating pin into the guiding tube.

Accoding to the invention, the piston is provided as disc-like piston sliding on an inner surface of the guiding tube and having a thereto orthogonal arranged piston rod linearly extending in moving direction within the guiding tube. The disc-like piston preferably extends radially and/or slides gas tight onto the inner surface of the guiding tube. Inside view, the piston may comprise a T-shape. The piston rod preferably extends axially with in the guiding tube.

According to another preferred implementation the piston rod is hollow and the upper end comprises a damper element facing the hollow piston rod and that, when the piston reaches the open position, becomes surrounded by the hollow piston rod. The damper element preferably comprises a cylinder-like shape and/or extends from the upper end towards the lower end. The damper element is preferably dimensioned such that its outer diameter is slightly smaller than an inner diameter of the hollow piston rod. The hollow piston rod is preferably fluidly connected to the arcing region.

In a further preferred implementation, the piston rod is provided as a tube and the damper element comprises a tube-like shape having a diameter smaller than a diameter of the piston rod. The diameter is preferably 0,5, 1, 2, 3, 5 or 10 % smaller.

The damper element preferably extends from the upper end over 5, 10, 15 or 20 cm into the guiding tube.

According to the invention the disc-like piston comprises at least one piston bar-like element extending from the disc-like piston linear in moving direction towards the upper end and/or the lower end and the upper end and/or the lower end comprises a respective piston bar-like opening through which the piston bar-like element passes when the piston reaches the open position and/or the closed position. The piston bar-like element preferably extends in axial direction, preferably over 5, 10, 15 or 20 cm, and/or is provided as rod. An outer diameter of the piston bar-like element is preferably 0,5, 1, 2, 3, 5 or 10 % smaller than an inner diameter of the piston bar-like opening. A plurality of parallel extending piston bar-like elements can be provided. By means of such piston bar-like element the damping characteristic can be individually adjusted.

Alternatively, the lower end comprises at least one lower bar-like element extending from the lower end linear towards the upper end and the disc-like piston comprises a respective lower bar-like opening through which the lower bar-like element passes when the piston reaches the closed position. The lower bar-like element preferably extends in axial direction, preferably over 5, 10, 15 or 20 cm, and/or is provided as rod. An outer diameter of the lower bar-like element is preferably 0,5, 1, 2, 3, 5 or 10 % smaller than an inner diameter of the lower bar-like opening. A plurality of parallel extending lower bar-like elements can be provided. By means of such lower bar-like element the damping characteristic can be individually adjusted.

According to another preferred implementation the lower end is provided disc-like surrounding the piston rod. Preferably, the lower end is gas tight connected to the guiding cube and/or the piston rod comprises an outer diameter 1, 2, 5 or 10% smaller than an opening of the lower end surrounding the piston rod.

In a further preferred implementation, the earthing switch comprises an operating mechanism for said movable contact. Said operating mechanism may comprises an actuating spring for actuating the closing operation of said movable contact from said open position to said closed position and/or at least a driving lever mounted on an operating shaft actuating an opening operation of said movable contact from said closed position to said open position. The driving lever may also partially reload said actuating spring during said opening operation. Further, said operating mechanism further may comprise coupling means operatively coupling said driving lever to said movable contact.

According to another preferred implementation the upper end of the guiding tube comprises a gas refilling valve. Such gas refilling valve is advantageous for avoiding loss of speed generation if an under pressure takes place. For closing and opening operation the same spring can be used. In such case the same energy amount is available for both operations. Speed can be controlled by playing with the gas resistance from the piston. Such way contact can be a bit, but not much, slower in opening than in closing direction.

The object is further solved by a three-pole high voltage, HV, substation comprising for each pole a fast earthing switch as described before and in particular for each pole a motor for actuating the fast earthing switch of the corresponding pole. In case of such three-pole HV substation, said fast earthing switches can be three-pole operated, in particular comprising a single motor and mechanical connections for actuating all fast earthing switch devices, or single-pole operated, in particular comprising for each pole a motor for actuating the fast earthing switch device of the corresponding pole.

The object is further solved by a use of the fast earthing switch as described before for interrupting non-short-circuit currents and/or for guiding short circuit currents to ground.

The object is even further solved by a method for decelerating movement of a piston in a fast earthing switch in particular for interrupting non-short-circuit currents and/or for guiding short circuit currents to ground comprising
two contacts of which at least one contact is movable in relation to the other contact between a closed position, in which the contacts are connected, and an open position, in which the contacts are unconnected, said contacts defining an arcing region in which an arc is generated during a current interrupting operation and in which an arc-quenching medium is present,
a cylinder-like guiding tube in which the at least one movable contact forming the piston is slidably arranged for linearly moving between the closed position and the open position, whereby
the guiding tub is closed at an upper end so that the piston defines a first compression chamber with the upper end, and/or the guiding tube is closed at a thereto opposite lower end so that the piston defines a second compression chambe with the lower end and the piston is provided as disc-like piston sliding on an inner surface of the guiding tube and having a thereto orthogonal arranged piston rod linearly extending in moving direction within the guiding tube, and comprising the step of:
   Decelerating movement of the piston when moving into the open position and/or into the closed position, whereby the disc-like piston comprises at least one piston bar-like element extending from the disc-like piston linear in moving direction towards the upper end and/or the lower end and the upper end and/or the lower end comprises a respective piston bar-like opening through which the piston bar-like element passes when the piston reaches the open position and/or the closed position, or the lower end comprises at least one lower bar-like element extending from the lower end linear towards the upper end and the disc-like piston comprises a respective lower bar-like opening through which the lower bar-like element passes when the piston reaches the closed position.

Further implementations and advantages of the method are directly and unambiguously derived by the person skilled in the art from the earthing switch as described before.

The object is even further solved by a use of the method for decelerating movement of a piston in a fast earthing switch according to the previous claim for interrupting non-short-circuit currents and/or for guiding short circuit currents to ground.

### Brief description of drawings

These and other aspects of the invention will be apparent from and elucidated with reference to the implementations described hereinafter.

In the drawings:
Fig. 1 shows an upper part of a fast earthing switch for interrupting non-short-circuit currents and/or for guiding short circuit currents to ground in a sectional view according to a preferred implementation,
Fig. 2 shows the upper part of the fast earthing switch for interrupting non-short-circuit currents and/or for guiding short circuit currents to ground in a sectional view according to a further preferred implementation, and
Fig. 3 shows the upper part of the fast earthing switch for interrupting non-short-circuit currents and/or for guiding short circuit currents to ground in a sectional view according to an even further preferred implementation.

### Description of implementations

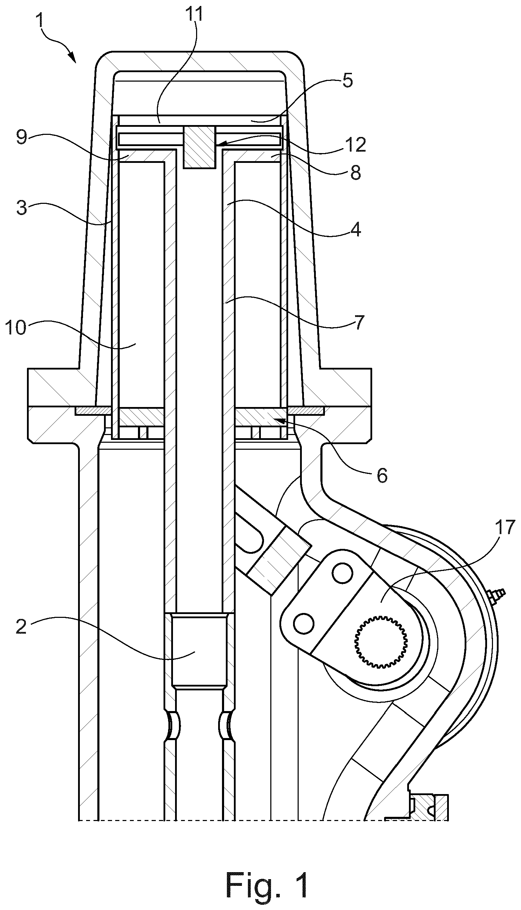

Figs. 1 to 3 show an upper part of a fast earthing switch 1 for interrupting non-short-circuit currents and/or for guiding short circuit currents to ground in respective sectional views according to different preferred implementations.

The fast earthing switch 1 for interrupting non-short-circuit currents comprises two contacts 2, of which one contact 2 is movable in relation to the other contact, not shown in the Figs. and arranged beneath the moveable contact 2. Said movable contact is movable between a closed position, in which the contacts 2 are electrically connected, and an open position, shown in all Figs., in which the contacts 2 are unconnected. The movable contact 2 can be provided as tulip contact and the fixed contact can be provided as plug contact, or otherwise vice versa. Also, both contacts can be arranged movable in respect to each other. The two contacts 2 define an arcing region, not shown in the Figs., in which an arc is generated during a current interrupting operation and in which an arc-quenching medium comprising an arc extinguishing gas is present.

The earthing switch 1 further comprises a gas-tight cylinder-like guiding tube 3, specifically as right circular hollow cylinder. An upper end of the movable contact 2 is formed as piston 4 having a T-shape in the sectional view in the Figs., whereby said piston 4 is slidably arranged for linearly moving, in vertical direction in the Figs., between the closed position and the open position within the guiding tube 3. The guiding tube 3 is closed at an upper end 5 and at a thereto opposite lower end 6.

Specifically, the upper end 5 is provided disc-like as closed base area, whereas the lower end 6 is provided disc-like surrounding a piston rod 7 of the piston 4. As the piston 4 is provided as disc-like piston 8 having a disc-like head that slides on an inner surface of the guiding tube 3, the piston 4 defines a first compression chamber 9 with the upper end 5 and a second compression chamber 10 with the lower end 6. When moving the piston 4 between open position and closed position, arc-quenching medium present in the guiding tube 3 in the first compression chamber 9 respectively in the second compression chamber 10 is compressed, which then leads to an decelerating of the piston 4 when moving into the open position respectively into the closed position.

In order to adjust the damping characteristic of the first compression chamber 9 and the second compression chamber 10, various possibilities exist, which can be combined even if explained separately in the following. As a first measure, a gas escape limiting device formed by a pressure relief valve 11 can be provided, which can be arranged axially extending through the upper end 5 and/or in the lower end 6 of the guiding tube 3.

In the further implementation, the piston rod 7 is provided hollow having a tube-like shape such that the arc-quenching medium can flow from the arcing region into the guiding tube 3. In this respect a damper element 12 in form of a massive cylinder can be arranged on the upper end 5 extending towards the lower end 6 and aligned with the piston rod 7. An outer diameter of the damper element 12 is 2, 5 or 10% smaller than an inner diameter of the piston rod 7.

Such way the piston rod 7, when reaching the open position, surrounds the damper element 12. This means, that during a movement of the piston 4 into the open position, the arc-quenching medium becomes compressed within the first compression chamber 9 and subsequently tries to escape through the full diameter of hollow piston rod 7. However, when the hollow piston rod 7 surrounds the damper element 12, a free diameter of the system rod 7 becomes much smaller for the arc-quenching medium to escape such that the damping becomes greater at an end of the movement of the piston 7.

In a comparable manner a free diameter of the lower end 6 in respect to the outer diameter of the piston rod 7 defines the damper characteristic of the second compression chamber 10 when the piston 4 moves into the closed position.

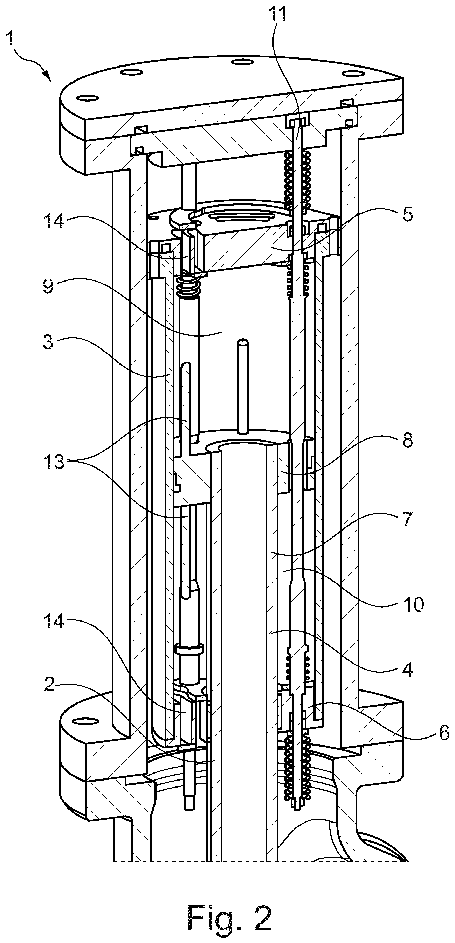

Fig. 2 shows a further implementation of the earthing switch 1, whereby the disc-like piston 8 comprises two axially extending piston rod bar-like elements 13, each provided as rod and each extending from the disc-like piston 13 linear in moving direction one towards the upper end 5 and one in extension thereto towards the lower end 6. The upper end 5 and the lower end 6 each comprise a respective piston bar-like opening 14, through which the piston bar-like element 13 passes when the piston 4 reaches the open position respectively the closed position.

An outer diameter of the piston bar-like elements 13 is slightly smaller than an inner diameter of the piston bar-like openings 14. The length of the piston bar-like elements 13 is dimensioned such that the piston bar-like elements 13 can move freely between the open position and the close position without extending through the respective piston bar-like openings 14, while extending through the respective piston bar-like openings 14 in a vicinity of the piston bar-like openings 14 for thereby resulting in an increased damping force close to an end of the movement.

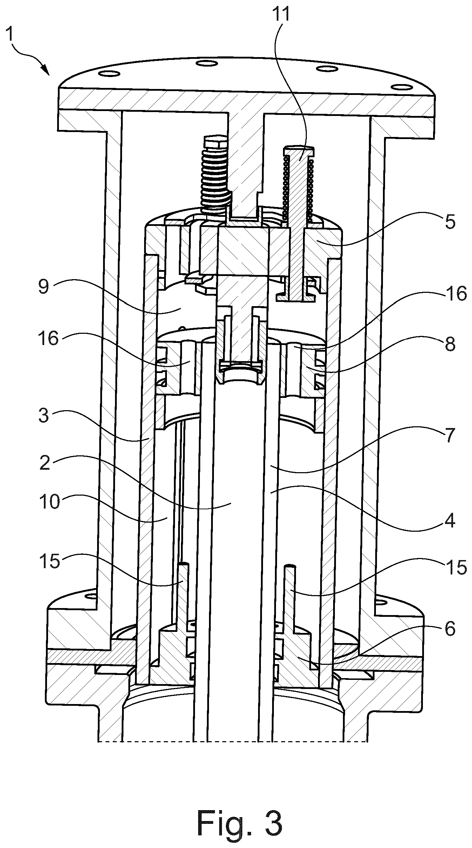

Fig. 3 shows an even further implementation of the earthing switch 1, whereby the lower end 6 comprises on each side of the piston rod 7 one lower bar-like element 15 that axially extends from the lower end 6 linear towards the upper end 5 as rod. The disc-like piston 8 comprises a respective lower bar-like opening 16 through which the respective lower bar-like element 15 passes when the piston 4 reaches the closed position. Also here, an outer diameter of the lower bar-like elements 15 is slightly smaller than an inner diameter of the lower bar-like openings 16.

The earthing switch further comprises an operating mechanism 17 for actuating said movable contact 2, as can be seen from Fig. 1. Said operating mechanism 17 may comprises an actuating spring for actuating the closing operation of said movable contact 2 from said open position to said closed position and/or at least a driving lever mounted on an operating shaft actuating an opening operation of said movable contact from said closed position to said open position. The described earthing switch can be used in a three-pole high voltage substation thereby comprising for each pole a fast earthing switch and for each pole a motor for actuating the fast earthing switch of the corresponding pole.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: earthing switch
- 2: movable contact
- 3: guiding tube
- 4: piston
- 5: upper end
- 6: lower end
- 7: piston rod
- 8: disc-like piston
- 9: first compression chamber
- 10: second compression chamber
- 11: pressure relief valve
- 12: damper element
- 13: piston bar-like element
- 14: piston bar-like opening
- 15: lower bar-like element
- 16: lower bar-like opening
- 17: operating mechanism

## Claims

1. A fast earthing switch (1) comprising
two contacts (2) of which at least one contact (2) is movable in relation to the other contact between a closed position, in which the contacts (2) are connected, and an open position, in which the contacts (2) are unconnected, said contacts (2) defining an arcing region in which an arc is generated during a current interrupting operation and in which an arc-quenching medium is present,
a cylinder-like guiding tube (3) in which the at least one movable contact (2) forming a piston (4) is slidably arranged for linearly moving between the closed position and the open position, whereby
the guiding tube (3) is closed at an upper end (5) so that the piston (4) defines a first compression chamber (9) with the upper end (5) for thereby decelerating movement of the piston (4) when moving into the open position and/or
the guiding tube (3) is closed at a thereto opposite lower end (6) so that the piston (4) defines a second compression chamber (10) with the lower end (6) for thereby decelerating movement of the piston (4) when moving into the closed position, and
the piston (4) is provided as disc-like piston (8) sliding on an inner surface of the guiding tube (3) and having a thereto orthogonal arranged piston rod (7) linearly extending in moving direction within the guiding tube (3), **characterized in that**
the disc-like piston (8) comprises at least one piston bar-like element (13) extending from the disc-like piston (8) linear in moving direction towards the upper end (5) and/or the lower end (6) and the upper end (5) and/or the lower end (6) comprises a respective piston bar-like opening (14) through which the piston (4) bar-like element passes when the piston (4) reaches the open position and/or the closed position, or
the lower end (6) comprises at least one lower bar-like element (15) extending from the lower end (6) linear towards the upper end (5) and the disc-like piston (8) comprises a respective lower bar-like opening (16) through which the lower bar-like element (15) passes when the piston (4) reaches the closed position.

2. The fast earthing switch (1) according to the previous claim, whereby at least one pressure relief valve (11) is provided in the upper end (5) and/or in the lower end (6) of the guiding tube (3).

3. The fast earthing switch (1) according to any of the previous claims, whereby the piston rod (7) is hollow and the upper end (5) comprises a damper element (12) facing the hollow piston rod (7) and that, when the piston (4) reaches the open position, becomes surrounded by the hollow piston rod (7).

4. The fast earthing switch (1) according to the previous claim, whereby the piston rod (7) is provided as a tube and the damper element (12) comprises a tube-like shape having a diameter smaller than a diameter of the piston rod (7).

5. The fast earthing switch (1) according to any of the previous claims, whereby the upper end (5) of the guiding tube (3) comprises a gas refilling valve.

6. The fast earthing switch (1) according to any of the previous claims, whereby the lower end (6) is provided disc-like surrounding the piston rod (7).

7. The fast earthing switch (1) according to any of the previous claims, comprising an operating mechanism (17) for said movable contact (2).

8. A three-pole high voltage substation comprising for each pole a fast earthing switch (1) according to any of the previous claims and in particular for each pole a motor for actuating the fast earthing switch (1) of the corresponding pole.

9. Use of the fast earthing switch (1) according to any of the previous fast earthing switch (1) claims for interrupting non-short-circuit currents and/or for guiding short circuit currents to ground.

10. Method for decelerating movement of a piston (4) in a fast earthing switch (1) comprising
two contacts (2) of which at least one contact (2) is movable in relation to the other contact between a closed position, in which the contacts (2) are connected, and an open position, in which the contacts (2) are unconnected, said contacts (2) defining an arcing region in which an arc is generated during a current interrupting operation and in which an arc-quenching medium is present,
a cylinder-like guiding tube (3) in which the at least one movable contact (2) forming the piston (4) is slidably arranged for linearly moving between the closed position and the open position, whereby
the guiding tube (3) is closed at an upper end (5) so that the piston (4) defines a first compression chamber (9) with the upper end (5) and/or
the guiding tube (3) is closed at a thereto opposite lower end (6) so that the piston (4) defines a second compression chamber (10) with the lower end (6) and
the piston (4) is provided as disc-like piston (8) sliding on an inner surface of the guiding tube (3) and having a thereto orthogonal arranged piston rod (7) linearly extending in moving direction within the guiding tube (3), and comprising the step of:
Decelerating movement of the piston (4) when moving into the open position and/or into the closed position, whereby
the disc-like piston (8) comprises at least one piston bar-like element (13) extending from the disc-like piston (8) linear in moving direction towards the upper end (5) and/or the lower end (6) and the upper end (5) and/or the lower end (6) comprises a respective piston bar-like opening (14) through which the piston (4) bar-like element passes when the piston (4) reaches the open position and/or the closed position, or
the lower end (6) comprises at least one lower bar-like element (15) extending from the lower end (6) linear towards the upper end (5) and the disc-like piston (8) comprises a respective lower bar-like opening (16) through which the lower bar-like element (15) passes when the piston (4) reaches the closed position.

11. Use of the method for decelerating movement of a piston (4) in a fast earthing switch (1) according to the previous claim for interrupting non-short-circuit currents and/or for guiding short circuit currents to ground.

## Patentansprüche

1. Schneller Erdungsschalter (1), umfassend
zwei Kontakte (2), von denen mindestens ein Kontakt (2) in Bezug auf den anderen Kontakt zwischen einer geschlossenen Position, in der die Kontakte (2) verbunden sind, und einer offenen Position, in der die Kontakte (2) nicht verbunden sind, beweglich ist, wobei die Kontakte (2) einen Lichtbogenbereich definieren, in dem ein Lichtbogen während eines Stromunterbrechungsvorgangs erzeugt wird und in dem ein lichtbogenlöschendes Medium vorhanden ist,
ein zylinderartiges Führungsrohr (3), in dem mindestens ein beweglicher Kontakt (2), der einen Kolben (4) bildet, gleitend zur linearen Bewegung zwischen der geschlossenen Position und der offenen Position angeordnet ist, wobei
das Führungsrohr (3) an einem oberen Ende (5) geschlossen ist, sodass der Kolben (4) eine erste Druckkammer (9) mit dem oberen Ende (5) bildet, um dadurch die Bewegung des Kolbens (4) beim Bewegen in die offene Position zu verlangsamen, und/oder
das Führungsrohr (3) an einem dazu entgegengesetzten unteren Ende (6) geschlossen ist, sodass der Kolben (4) eine zweite Druckkammer (10) mit dem unteren Ende (6) definiert, um dadurch die Bewegung des Kolbens (4) beim Bewegen in die geschlossene Position zu verlangsamen, und
der Kolben (4) als scheibenartiger Kolben (8) bereitgestellt ist, der auf einer Innenfläche des Führungsrohrs (3) gleitet und eine dazu orthogonal angeordnete Kolbenstange (7) aufweist, die sich linear in der Bewegungsrichtung innerhalb des Führungsrohrs (3) erstreckt, **dadurch gekennzeichnet, dass**
der scheibenartige Kolben (8) mindestens ein kolbenstangenartiges Element (13) umfasst, das sich von dem scheibenartigen Kolben (8) linear in Bewegungsrichtung zu dem oberen Ende (5) und/oder dem unteren Ende (6) erstreckt, und das obere Ende (5) und/oder das untere Ende (6) eine jeweilige kolbenstangenartige Öffnung (14) umfassen, durch die das kolben(4)-stangenartige Element verläuft, wenn der Kolben (4) die offene Position und/oder die geschlossene Position erreicht, oder
das untere Ende (6) mindestens ein unteres stangenartiges Element (15) umfasst, das sich von dem unteren Ende (6) linear zu dem oberen Ende (5) erstreckt, und der scheibenartige Kolben (8) eine jeweilige untere stangenartige Öffnung (16) umfasst, durch die das untere stangenartige Element (15) verläuft, wenn der Kolben (4) die geschlossene Position erreicht.

2. Schneller Erdungsschalter (1) nach dem vorhergehenden Anspruch, wobei mindestens ein Druckbegrenzungsventil (11) in dem oberen Ende (5) und/oder in dem unteren Ende (6) des Führungsrohrs (3) bereitgestellt ist.

3. Schneller Erdungsschalter (1) nach einem der vorhergehenden Ansprüche, wobei die Kolbenstange (7) hohl ist und das obere Ende (5) ein Dämpferelement (12) umfasst, das der hohlen Kolbenstange (7) zugewandt ist und das, wenn der Kolben (4) die offene Position erreicht, von der hohlen Kolbenstange (7) umgeben ist.

4. Schneller Erdungsschalter (1) nach einem der vorhergehenden Ansprüche, wobei die Kolbenstange (7) als ein Rohr bereitgestellt ist und das Dämpferelement (12) eine rohrartige Form mit einem Durchmesser, der kleiner als ein Durchmesser der Kolbenstange (7) ist, umfasst.

5. Schneller Erdungsschalter (1) nach einem der vorhergehenden Ansprüche, wobei das obere Ende (5) des Führungsrohrs (3) ein Gasnachfüllventil umfasst.

6. Schneller Erdungsschalter (1) nach einem der vorhergehenden Ansprüche, wobei das untere Ende (6) scheibenartig um die Kolbenstange (7) bereitgestellt ist.

7. Schneller Erdungsschalter (1) nach einem der vorhergehenden Ansprüche, umfassend einen Betriebsmechanismus (17) für den beweglichen Kontakt (2).

8. Dreipoliges Hochspannungsumspannwerk, umfassend für jeden Pol einen schnellen Erdungsschalter (1) nach einem der vorhergehenden Ansprüche und insbesondere für jeden Pol einen Motor zum Betätigen des schnellen Erdungsschalters (1) des entsprechenden Pols.

9. Verwendung des schnellen Erdungsschalters (1) nach einem der vorhergehenden Ansprüche des schnellen Erdungsschalters (1) zum Unterbrechen von Nicht-Kurzschlussströmen und/oder zum Führen von Kurzschlussströmen zur Masse.

10. Verfahren zum Verlangsamen der Bewegung eines Kolbens (4) in einem schnellen Erdungsschalter (1), umfassend
zwei Kontakte (2), von denen mindestens ein Kontakt (2) in Bezug auf den anderen Kontakt zwischen einer geschlossenen Position, in der die Kontakte (2) verbunden sind, und einer offenen Position, in der die Kontakte (2) nicht verbunden sind, beweglich ist, wobei die Kontakte (2) einen Lichtbogenbereich definieren, in dem ein Lichtbogen während eines Stromunterbrechungsvorgangs erzeugt wird und in dem ein lichtbogenlöschendes Medium vorhanden ist,
ein zylinderartiges Führungsrohr (3), in dem mindestens ein beweglicher Kontakt (2), der den Kolben (4) bildet, gleitend zur linearen Bewegung zwischen der geschlossenen Position und der offenen Position angeordnet ist, wobei
das Führungsrohr (3) an einem oberen Ende (5) geschlossen ist, sodass der Kolben (4) eine erste Druckkammer (9) mit dem oberen Ende (5) bildet, und/oder
das Führungsrohr (3) an einem dazu entgegengesetzten unteren Ende (6) geschlossen ist, sodass der Kolben (4) eine zweite Druckkammer (10) mit dem unteren Ende (6) definiert, und
der Kolben (4) als scheibenartiger Kolben (8) bereitgestellt ist, der auf einer Innenfläche des Führungsrohrs (3) gleitet und eine dazu orthogonal angeordnete Kolbenstange (7) aufweist, die sich linear in der Bewegungsrichtung innerhalb des Führungsrohrs (3) erstreckt, und den folgenden Schritt umfassend:
Verlangsamen der Bewegung des Kolbens (4) beim Bewegen in die offene Position und/oder in die geschlossene Position, wobei
der scheibenartige Kolben (8) mindestens ein kolbenstangenartiges Element (13) umfasst, das sich von dem scheibenartigen Kolben (8) linear in Bewegungsrichtung zu dem oberen Ende (5) und/oder dem unteren Ende (6) erstreckt, und das obere Ende (5) und/oder das untere Ende (6) eine jeweilige kolbenstangenartige Öffnung (14) umfassen, durch die das kolben(4)-stangenartige Element verläuft, wenn der Kolben (4) die offene Position und/oder die geschlossene Position erreicht, oder
das untere Ende (6) mindestens ein unteres stangenartiges Element (15) umfasst, das sich von dem unteren Ende (6) linear zu dem oberen Ende (5) erstreckt, und der scheibenartige Kolben (8) eine jeweilige untere stangenartige Öffnung (16) umfasst, durch die das untere stangenartige Element (15) verläuft, wenn der Kolben (4) die geschlossene Position erreicht.

11. Verwendung des Verfahrens zum Verlangsamen der Bewegung eines Kolbens (4) in einem schnellen Erdungsschalter (1) nach einem der vorhergehenden Ansprüche zum Unterbrechen von Nicht-Kurzschlussströmen und/oder zum Führen von Kurzschlussströmen zur Masse.

## Revendications

1. Sectionneur de terre rapide (1) comprenant
deux contacts (2) dont au moins un contact (2) peut être déplacé relativement à l'autre contact entre une position fermée, dans laquelle les contacts (2) sont connectés, et une position ouverte, dans laquelle les contacts (2) ne sont pas connectés, lesdits contacts (2) définissant une région d'arc dans laquelle un arc est généré pendant une opération d'interruption de courant et dans laquelle un milieu d'extinction d'arc est présent,
un tube de guidage cylindrique (3) dans lequel l'au moins un contact pouvant être déplacé (2) formant un piston (4) est agencé de manière coulissante pour se déplacer de manière linéaire entre la position fermée et la position ouverte, moyennant quoi
le tube de guidage (3) est fermé au niveau d'une extrémité supérieure (5) de telle sorte que le piston (4) définit une première chambre de compression (9) avec l'extrémité supérieure (5) pour ralentir ainsi le mouvement du piston (4) lors du déplacement dans la position ouverte et/ou
le tube de guidage (3) est fermé au niveau d'une extrémité inférieure (6) opposée à la précédente de telle sorte que le piston (4) définit une seconde chambre de compression (10) avec l'extrémité inférieure (6) pour ralentir ainsi le mouvement du piston (4) lors du déplacement dans la position fermée, et
le piston (4) est pourvu en tant que piston discoïde (8) coulissant sur une surface interne du tube de guidage (3) et ayant une tige de piston (7) agencée de manière orthogonale à celui-ci s'étendant de manière linéaire dans la direction de déplacement au sein du tube de guidage (3), **caractérisé en ce que**
le piston discoïde (8) comprend au moins un élément en barre de piston (13) s'étendant de manière linéaire depuis le piston discoïde (8) dans la direction de déplacement vers l'extrémité supérieure (5) et/ou l'extrémité inférieure (6) et l'extrémité supérieure (5) et/ou l'extrémité inférieure (6) comprend une ouverture en barre de piston (14) respective à travers laquelle l'élément en barre de piston (4) passe lorsque le piston (4) atteint la position ouverte et/ou la position fermée, ou
l'extrémité inférieure (6) comprend au moins un élément en barre inférieur (15) s'étendant de manière linéaire depuis l'extrémité inférieure (6) vers l'extrémité supérieure (5) et le piston discoïde (8) comprend une ouverture en barre inférieure (16) respective à travers laquelle l'élément en barre inférieur (15) passe lorsque le piston (4) atteint la position fermée.

2. Sectionneur de terre rapide (1) selon la revendication précédente, moyennant quoi au moins une soupape de décharge (11) est pourvue dans l'extrémité supérieure (5) et/ou dans l'extrémité inférieure (6) du tube de guidage (3).

3. Sectionneur de terre rapide (1) selon l'une quelconque des revendications précédentes, moyennant quoi la tige de piston (7) est creuse et l'extrémité supérieure (5) comprend un élément d'amortisseur (12) faisant face à la tige de piston creuse (7) et qui, lorsque le piston (4) atteint la position ouverte, devient entouré par la tige de piston creuse (7).

4. Sectionneur de terre rapide (1) selon la revendication précédente, moyennant quoi la tige de piston (7) est pourvue sous forme de tube et l'élément d'amortisseur (12) comprend une forme tubulaire ayant un diamètre inférieur à un diamètre de la tige de piston (7).

5. Sectionneur de terre rapide (1) selon l'une quelconque des revendications précédentes, moyennant quoi l'extrémité supérieure (5) du tube de guidage (3) comprend une soupape de remplissage de gaz.

6. Sectionneur de terre rapide (1) selon l'une quelconque des revendications précédentes, moyennant quoi l'extrémité inférieure (6) est pourvue de manière discoïde de manière à entourer de la tige de piston (7).

7. Sectionneur de terre rapide (1) selon l'une quelconque des revendications précédentes, comprenant un mécanisme de fonctionnement (17) pour ledit contact mobile (2).

8. Sous-station haute tension tripolaire comprenant pour chaque pôle un sectionneur de terre rapide (1) selon l'une quelconque des revendications précédentes et en particulier pour chaque pôle un moteur destiné à actionner le sectionneur de terre rapide (1) du pôle correspondant.

9. Utilisation du sectionneur de terre rapide (1) selon l'une quelconque des revendications de sectionneur de terre rapide (1) précédentes pour interrompre des courants autres que de court-circuit et/ou pour guider les courants de court-circuit vers la terre.

10. Procédé de ralentissement du mouvement d'un piston (4) dans un sectionneur de terre rapide (1) comprenant
deux contacts (2) dont au moins un contact (2) peut être déplacé relativement à l'autre contact entre une position fermée, dans laquelle les contacts (2) sont connectés, et une position ouverte, dans laquelle les contacts (2) ne sont pas connectés, lesdits contacts (2) définissant une région d'arc dans laquelle un arc est généré pendant une opération d'interruption de courant et dans laquelle un milieu d'extinction d'arc est présent,
un tube de guidage cylindrique (3) dans lequel l'au moins un contact pouvant être déplacé (2) formant le piston (4) est agencé de manière coulissante pour se déplacer de manière linéaire entre la position fermée et la position ouverte, moyennant quoi
le tube de guidage (3) est fermé au niveau d'une extrémité supérieure (5) de telle sorte que le piston (4) définit une première chambre de compression (9) avec l'extrémité supérieure (5) et/ou
le tube de guidage (3) est fermé au niveau d'une extrémité inférieure (6) opposée à la précédente de telle sorte que le piston (4) définit une seconde chambre de compression (10) avec l'extrémité inférieure (6) et
le piston (4) est pourvu en tant que piston discoïde (8) coulissant sur une surface interne du tube de guidage (3) et ayant une tige de piston (7) agencée de manière orthogonale à celui-ci s'étendant de manière linéaire dans la direction de déplacement au sein du tube de guidage (3), et comprenant l'étape consistant à :
ralentir le mouvement du piston (4) lors du déplacement dans la position ouverte et/ou dans la position fermée, moyennant quoi
le piston discoïde (8) comprend au moins un élément en barre de piston (13) s'étendant de manière linéaire depuis le piston discoïde (8) dans la direction de déplacement vers l'extrémité supérieure (5) et/ou l'extrémité inférieure (6) et l'extrémité supérieure (5) et/ou l'extrémité inférieure (6) comprend une ouverture en barre de piston (14) respective à travers laquelle l'élément en barre de piston (4) passe lorsque le piston (4) atteint la position ouverte et/ou la position fermée, ou
l'extrémité inférieure (6) comprend au moins un élément en barre inférieur (15) s'étendant de manière linéaire depuis l'extrémité inférieure (6) vers l'extrémité supérieure (5) et le piston discoïde (8) comprend une ouverture en barre inférieure (16) respective à travers laquelle l'élément en barre inférieur (15) passe lorsque le piston (4) atteint la position fermée.

11. Utilisation du procédé de ralentissement du mouvement d'un piston (4) dans un sectionneur de terre rapide (1) selon la revendication précédente pour interrompre les courants autres que de court-circuit et/ou pour guider les courants de court-circuit vers la terre.
